# EUROPEAN PATENT APPLICATION

(11) **EP 2 258 539 A2**
(43) Date of publication of application: **08.12.2010**
(21) Application number: 10163094.5
(22) Date of filing: 18.05.2010
(51) Int. Cl.: B29D 11/00

(54) **Optical element processing method**

(30) Priority: 05.06.2009 JP 2009135771
(71) Applicant: Canon Kabushiki Kaisha, Tokyo 146-8501 (JP)
(72) Inventor: Numata, Atsushi, Tokyo Tokyo 146-8501 (JP)
(74) Representative: TBK-Patent

(57) **Abstract**

The entire processing apparatus is prevented from growing in size due to the size of an optical effective region of an optical element to be processed. The optical effective region 2 of the optical element 1 is divided into a plurality of divided regions 11 to 14 by the dividing line 5 and each divided region is sequentially aligned to the processable region 3 of the ion beam 4. The entire optical effective region 2 is processed by repeating the process of a raster scan with the ion beam 4 for each divided region in all divided regions 11 to 14. The entire processing apparatus can be made to be small by reducing the scanning range of the ion beam 4.

## Description

### BACKGROUND OF THE INVENTION

### Field of the Invention

The present invention relates to an optical element processing method of processing an optical element by causing a tool to scan in an optical effective region of an optical element surface.

### Description of the Related Art

In order to form an optical effective region satisfying desired optical characteristics on an optical element surface, the shape and the roughness of the optical effective region need to be processed to a certain precision or higher. The type and processing form of a tool (processing unit) used for processing the optical effective region are selected according to the base shape of the optical element and the target precision. For example, if the base shape of the optical element is a flat surface or a spherical surface, typically, a tool having the same size of the optical effective region or larger than the optical effective region is prepared and the entire optical effective region is processed at a time. However, if the base shape of the optical element is an aspherical shape or a free-form surface shape, the curvature differs depending on the place, and thus, usually, a tool having the same size of the optical effective region or larger than the optical effective region cannot be applied. In such a case, a tool having a spot processing shape smaller than the optical effective region to be processed is prepared and the entire optical effective region is processed by causing the tool to scan the optical effective region.

The scanning forms of the tool include a raster scan and a spiral scan. The tool is often held at a constant angle with the optical effective region while scanning.

The precision of the shape and the roughness required for the optical effective region are determined by the application of the optical element, the wavelength of light to be used, and the like. Usually, a very high precision in the order of subnanometers to several hundred nanometers is required. When a tool having a spot processing shape smaller than the optical effective region is made to scan the optical element surface and the optical effective region is processed at such a high precision, the scan path of the tool is made to be a continuous line covering the entire range of the optical effective region (see Japanese Patent Application Laid-Open No. H09-267244).

However, in order to make the scan path of the tool be a continuous line covering the entire range of the optical effective region as described above, a processable region of the processing unit needs to satisfy the size required to draw the continuous line. In other words, the processable region required for the processing unit is limited by the size of the optical effective region to be processed, thereby affecting the entire size of the processing apparatus. Conventionally, the larger the optical effective region to be processed, the larger the processable region required for the processing apparatus, which has been one of the big problems for miniaturizing the processing apparatus.

The present invention provides an optical element processing method capable of promoting miniaturization of a processing apparatus without a need for a processable region required for a processing unit to be limited by the size of an optical effective region to be processed.

### SUMMARY OF THE INVENTION

The present invention provides an optical element processing method in which an optical effective region of an optical element is processed by a processing unit scanning a processing region smaller than the optical effective region, the optical element processing method including: dividing the optical effective region by a dividing line into at least a first divided region and a second divided region; aligning the first divided region to a processing region of the processing unit; processing the aligned first divided region by scanning with the processing unit; aligning the second divided region to a processing region of the processing unit; and processing the aligned second divided region by scanning with the processing unit.

If an optical effective region of an optical element is larger than a processing region of a processing unit, the optical effective region is divided into a plurality of divided regions, each divided region is sequentially step-moved to the processing region of the processing unit, and the processing unit is caused to scan. The processing apparatus only needs to provide a processing region for scanning one divided region and thus can avoid the entire processing apparatus from growing in size.

Further features of the present invention will become apparent from the following description of exemplary embodiments with reference to the attached drawings.

### BRIEF DESCRIPTION OF THE DRAWINGS

FIG. 1A describes an optical element processing method according to an embodiment and is a perspective view illustrating an optical element and an ion beam.

FIG. 1B describes the optical element processing method according to the embodiment and is a plan view illustrating the optical element and the ion beam.

FIG. 1C describes the optical element processing method according to the embodiment and is a process view illustrating a process of processing with dividing an optical effective region into four regions.

FIG. 1D describes the optical element processing method according to the embodiment and is a process view illustrating a process of processing with dividing the optical effective region into four regions.

FIG. 1E describes the optical element processing method according to the embodiment and is a process view illustrating a process of processing with dividing the optical effective region into four regions.

FIG. 1F describes the optical element processing method according to the embodiment and is a process view illustrating a process of processing with dividing the optical effective region into four regions.

FIG. 1G describes a processing method according to a conventional example.

FIG. 2A is a perspective view describing a processable region of an ion beam.

FIG. 2B is a plan view describing the processable region of the ion beam.

FIG. 3A is a perspective view illustrating an optical element and an ion beam in a process of processing a first divided region of an optical element.

FIG. 3B is a plan view illustrating the optical element and the ion beam in the process of processing the first divided region of the optical element.

FIG. 4A is a perspective view illustrating an optical element and an ion beam in a process of processing a second divided region of an optical element.

FIG. 4B is a plan view illustrating the optical element and the ion beam in the process of processing the second divided region of the optical element.

FIG. 5A is a perspective view illustrating an optical element and an ion beam in a process of processing a third divided region of an optical element.

FIG. 5B is a plan view illustrating the optical element and the ion beam in the process of processing the third divided region of the optical element.

FIG. 6A is a perspective view illustrating an optical element and an ion beam in a process of processing a fourth divided region of an optical element.

FIG. 6B is a plan view illustrating the optical element and the ion beam in the process of processing the fourth divided region of the optical element.

FIG. 7A describes an optical element processing method according to a variation and is a perspective view illustrating an entire shape of the optical element.

FIG. 7B describes the optical element processing method according to the variation and is a perspective view describing division of the optical effective region.

FIG. 7C describes the optical element processing method according to the variation and is a plan view describing division of the optical effective region.

FIG. 8A is a perspective view illustrating a divided region of the optical element of FIGS. 7A, 7B and 7C.

FIG. 8B is a plan view illustrating the divided region of the optical element of FIGS. 7A, 7B and 7C.

FIG. 9A is a perspective view illustrating a process of processing the optical element of FIGS. 7A, 7B and 7C.

FIG. 9B is a plan view illustrating the process of processing the optical element of FIGS. 7A, 7B and 7C.

FIG. 10A describes a raster scan with an ion beam and is a plan view illustrating a scan path in a processable region of the ion beam.

FIG. 10B describes a raster scan with an ion beam and is a plan view illustrating a scan path in each divided region of the optical element.

FIG. 11A illustrates an optical element processing method according to an embodiment and is an elevational view illustrating an optical element.

FIG. 11B illustrates the optical element processing method according to the embodiment and is a plan view illustrates the optical element.

FIG. 12 is a perspective view illustrating a processing apparatus according to the embodiment of FIGS. 11A and 11B.

FIGS. 13A and 13B each describe an operation of the apparatus of FIGS. 11A and 11B.

FIGS. 14A and 14B each are a process view describing the optical element processing method according to the embodiment of FIGS. 11A and 11B.

FIG. 15 describes an optical element processing method according to a conventional example.

FIG. 16 is a perspective view illustrating a processing apparatus according to the conventional example of FIG. 15.

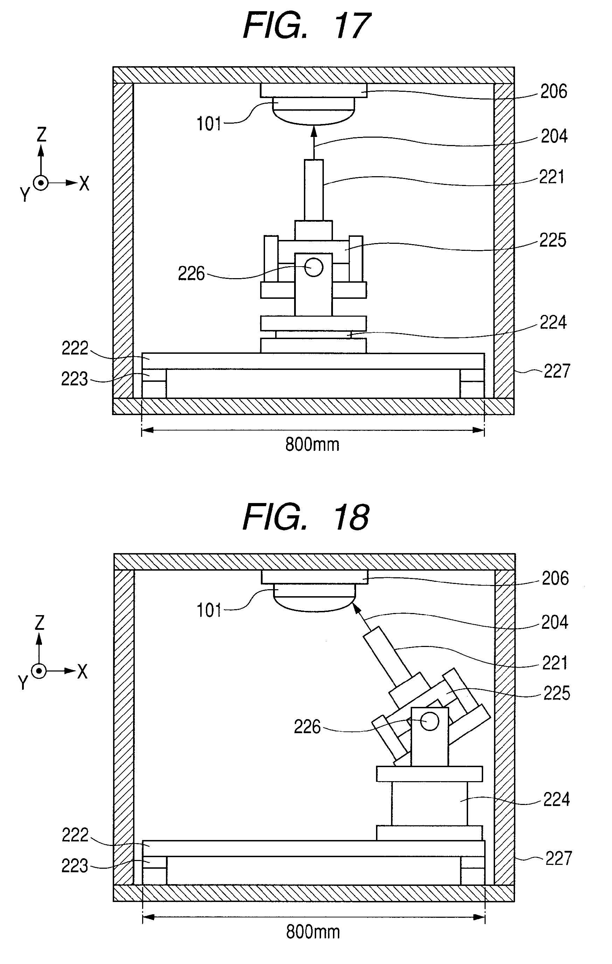

FIG. 17 is an elevational view illustrating the processing apparatus of FIG. 16.

FIG. 18 is an elevational view illustrating an operation of the processing apparatus of FIG. 16.

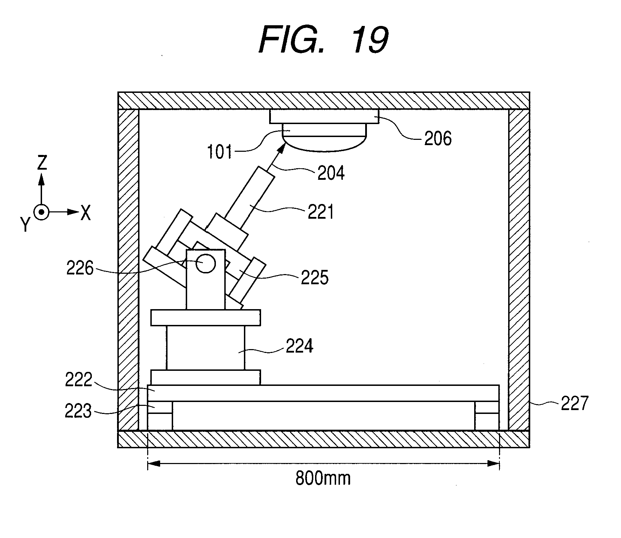

FIG. 19 is an elevational view illustrating another operation of the processing apparatus of FIG. 16.

### DESCRIPTION OF THE EMBODIMENTS

Preferred embodiments of the present invention will now be described in detail in accordance with the accompanying drawings.

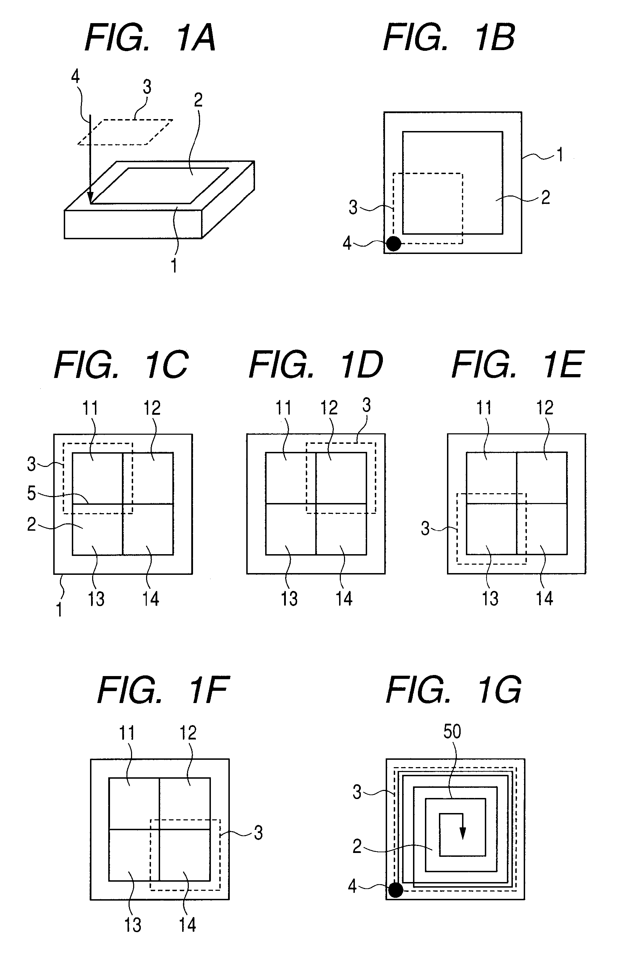

As illustrated in FIGS. 1A to 1F, an optical effective region 2 of an optical element 1 is processed by an ion beam 4 which is emitted from a processing unit and scans in a range of a processable region (processing region) 3 smaller than the optical effective region 2. Conventionally, when the ion beam 4 is made to scan a surface of the optical element 1 and the optical effective region 2 is processed at a high precision, as illustrated in FIG. 1G, a scan path 50 of the ion beam 4 is made to be a continuous line covering an entire range of the optical effective region 2. For this reason, the processable region 3 of the processing apparatus needs to satisfy a size required for the ion beam 4 to draw the scan path 50 and thus the processable region 3 is limited by the size of the optical effective region 2 to be processed. If the optical effective region 2 is large, the processable region 3 of the processing apparatus needs to be large accordingly. Therefore, it is difficult to miniaturize the entire processing apparatus.

The processable region 3 is a range in which the ion beam 4 and the optical element 1 can relatively move (scan). The processable region 3 is specified by a range in which a drive stage provided in the processing apparatus can move and a range in which a deflecting electrode installed in an ion gun can deflect the ion beam 4.

According to the present embodiment, the size of the optical effective region 2 defined on a surface of the optical element 1 is larger than the size of the processable region 3 of the processing apparatus as illustrated in FIGS. 1A and 1B. Therefore, the optical effective region 2 is divided into a plurality of regions by a dividing line 5 before processing. First, the optical effective region 2 is divided into four divided regions 11 to 14 by the dividing line 5. Then, the divided region 11 of the four divided regions 11 to 14 is aligned to the processable region 3. Only the divided region 11 is processed by scanning with the ion beam 4. Subsequently, the optical element 1 is step-moved to sequentially align the divided region 12, the divided region 13 and the divided region 14 to the processable region 3 of the processing apparatus. Then, each divided region is processed by scanning with the ion beam 4 until the processing of the entire optical effective region 2 is completed. According to the above method, even if the optical effective region 2 is larger than the processable region 3 of the processing apparatus, the entire optical effective region 2 can be processed. The processable region 3 of the processing apparatus is not limited by the size of the optical effective region 2 and thus the processing apparatus can be made to be small.

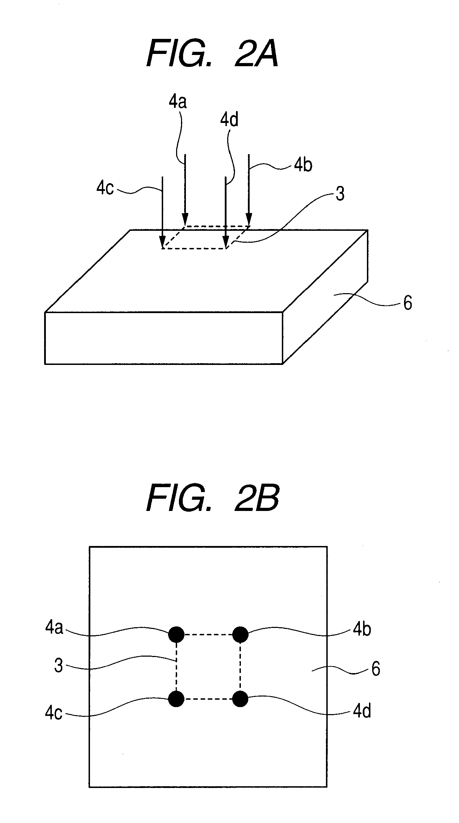

The optical element processing method according to the present embodiment will be described in detail. First, as illustrated in FIG. 2A, ion beams 4A to 4D are emitted from above the workpiece stage 6. A drive stage moves an ion gun (not illustrated), whereby the ion beams 4A to 4D can be emitted on the ion beam positions 4a to 4d and any position inside thereof as shown in FIG. 2B. That is, the ion beams 4A to 4D scans the processable region 3 by the drive stage, and the ion beams 4A to 4D process the optical element 1 in a range of the processable region 3.

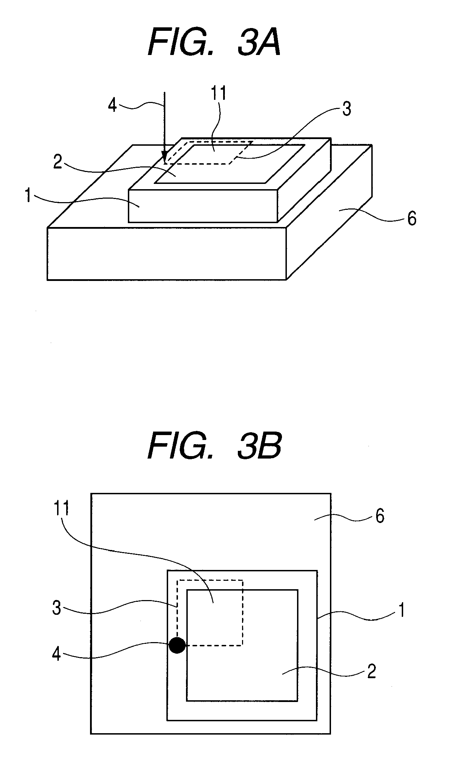

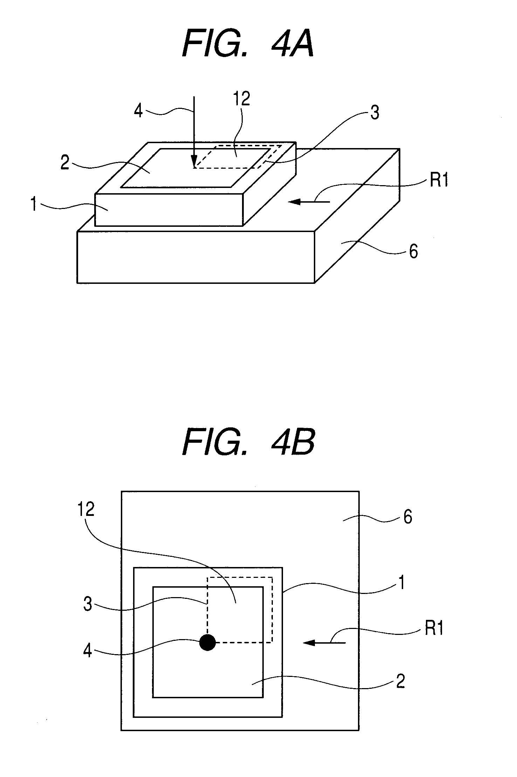

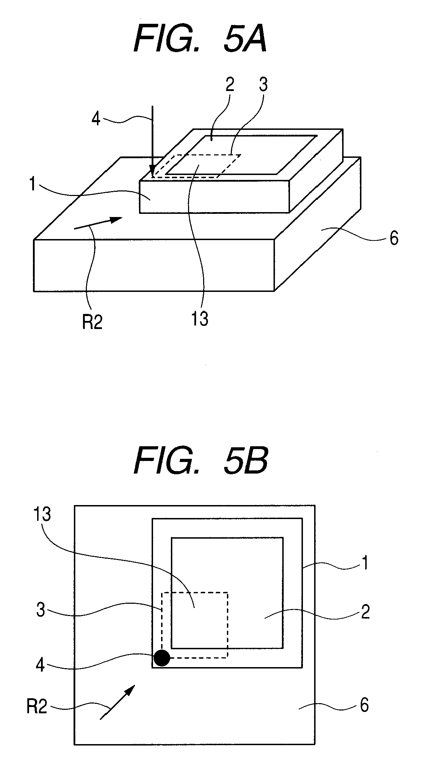

As illustrated in FIGS. 3A and 3B, the optical element 1 as a workpiece is mounted on the workpiece stage 6. Although the optical effective region 2 of the optical element 1 is the region to be processed, the optical effective region 2 is larger than the processable region 3. Therefore, first, the processable region 3 of the ion beam 4 is aligned to a first divided region 11 of the optical effective region 2, and a first divided region 11 is processed by scanning with the ion beam 4. Subsequently, as illustrated in FIGS. 4A and 4B, the optical element 1 is step-moved on the workpiece stage 6 in a direction indicated by an arrow R1 and then the second divided region 12 is processed. Further, as illustrated in FIGS. 5A and 5B, the optical element 1 is step-moved on the workpiece stage 6 in a direction indicated by an arrow R2 and then the third divided region 13 is processed.

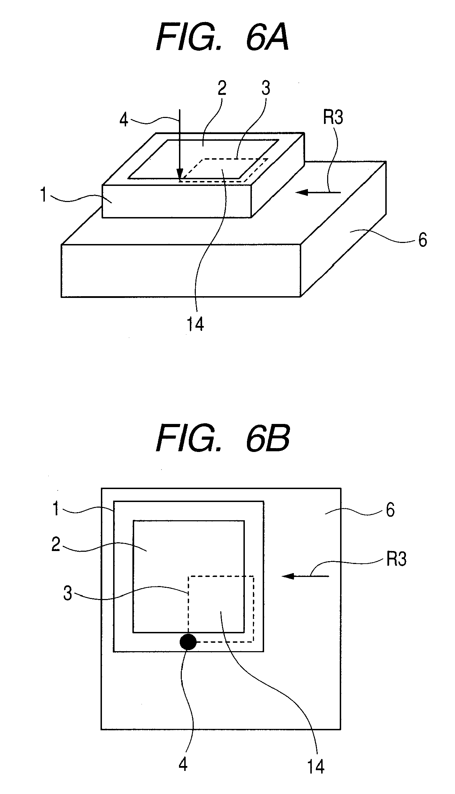

Finally, as illustrated in FIGS. 6A and 6B, the optical element 1 is step-moved on the workpiece stage 6 in a direction indicated by an arrow R3 and then the fourth divided region 14 is processed. Thus, the entire optical effective region 2 is processed.

The entire optical effective region 2 can be processed simply by step-moving the optical element 1 on the workpiece stage. Therefore, the processable region 3 of the processing apparatus is not limited by the size of the optical effective region 2 and thus the processing apparatus can be made to be small.

The optical effective region 2 and the processable region 3 each are illustrated in a rectangular region, but are not limited to this shape. Further, the optical effective region 2 is divided into four regions and processed, but may be divided into at least two regions consisted of a first divided region and a second divided region. The number of divided regions and the shape of the divided region are not limited to the above. The optical element 1 is step-moved as illustrated by the arrows R1 to R3, but the optical element 1 may be temporarily removed from the workpiece stage 6 and may be mounted manually again on a different position or a dedicated mechanism for moving the optical element 1 may be provided. Alternatively, a tool (processing unit) other than the ion beam may be used. The ion beam 4 is moved (scanned) inside the processable region 3 by moving an ion gun (not illustrated), but the optical element 1 may be moved instead or both the ion gun and the optical element 1 may be moved.

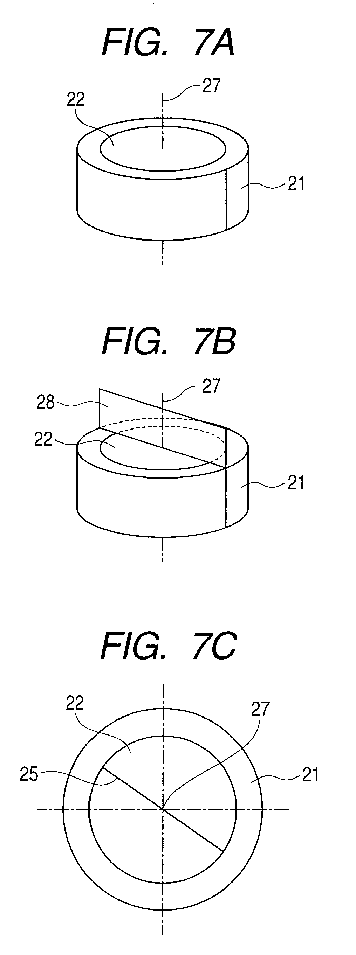

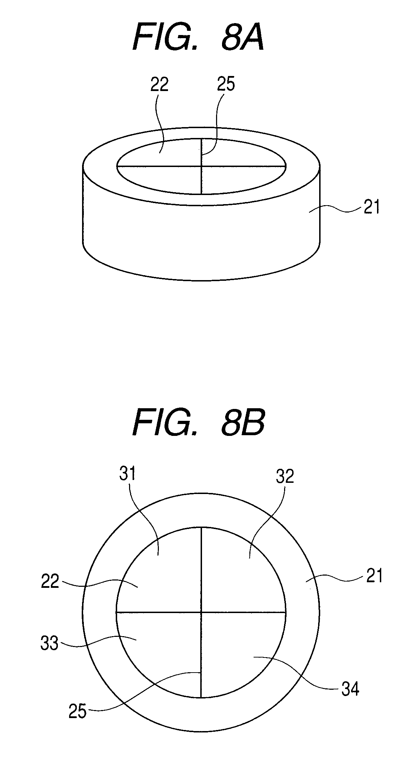

FIGS. 7A to 7C illustrate a variation. As illustrated in FIG. 7A, an optical effective region 22 of an optical element 21 is of a rotationally symmetric shape. As illustrated in FIG. 7B, the optical effective region 22 is divided into a plurality of regions by a flat surface 28 including a rotationally symmetric shaped rotationally symmetric axis (central axis) 27. As a result, as illustrated in FIG. 7C, the optical effective region 22 is divided by a dividing line 25 passing through the rotationally symmetric axis 27. As illustrated in FIGS. 8A and 8B, the dividing lines 25 passing through the rotationally symmetric axis 27 are two mutually orthogonal lines which divide the optical effective region 22 into four divided regions 31 to 34.

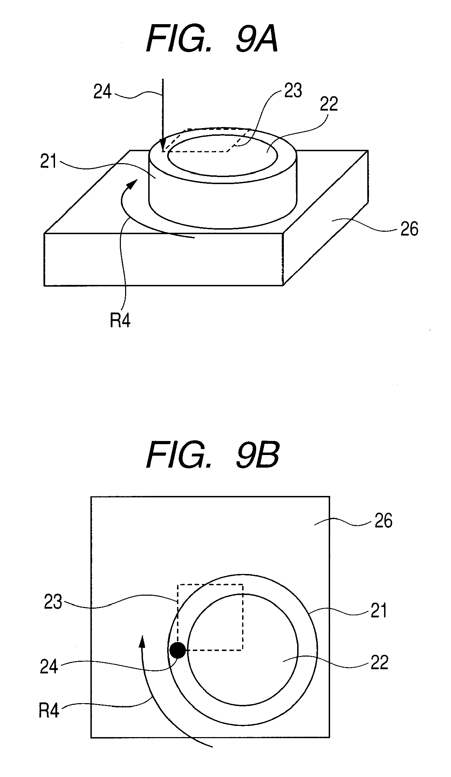

FIGS. 9A and 9B illustrate a state in which the optical element 21 is mounted on the processing apparatus. The optical element 21 is mounted on a workpiece stage 26, and an ion beam 24 is emitted from above. The ion beam 24 is scanned by a drive stage (not illustrated) to process an object to be processed in a range of a processable region 23. The optical effective region 22 is a region to be processed, but the optical effective region 22 is larger than the processable region 23. The optical element 21 is rotated on the workpiece stage 26 in a direction indicated by an arrow R4. The optical element 21 is sequentially rotated by 90° for each divided region to perform alignment, and is processed by the ion beam 24. The entire optical effective region 22 is processed by processing all the divided regions likewise. Thus, the entire optical effective region 22 can be processed simply by rotating the optical element 21 on the workpiece stage. The processable region 23 of the processing apparatus is not limited by the size of the optical effective region 22 and thus the processing apparatus can be made to be small.

The dividing lines 25 are illustrated as two mutually orthogonal lines, but the number of dividing lines and the angle between the dividing lines are not limited to the above. The optical element 21 may be temporarily removed from the workpiece stage 26 and may be rotated and mounted manually again or a dedicated mechanism for rotating the optical element 21 may be provided. The optical effective region 22 is all of a rotationally symmetric shape, but may be a part of a rotationally symmetric shape.

The optical element 22 may be rotated in an opposite direction and the rotation angle may not be 90°. Instead of the ion beam 24, another tool may be used. The ion beam 24 is moved (scanned) inside the processable region 23 by moving an ion gun (not illustrated), but the optical element 21 may be moved instead or both the ion gun and the optical element 21 may be moved.

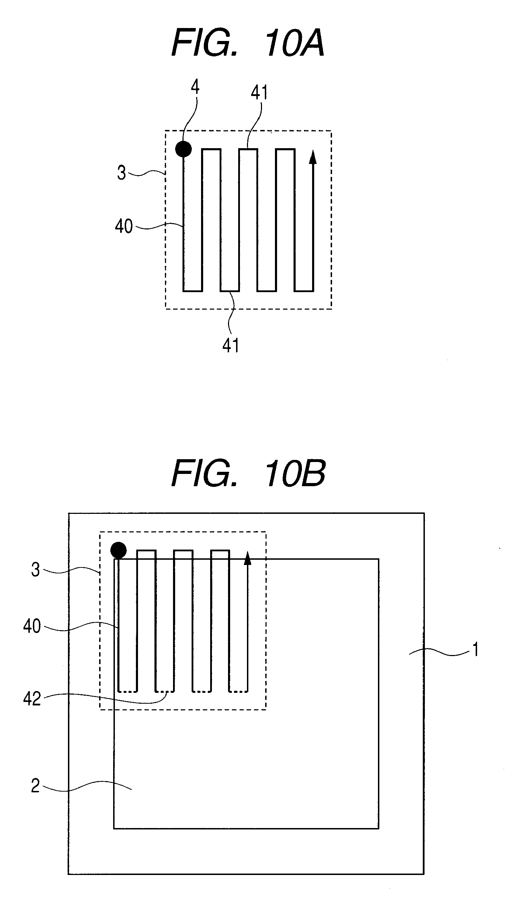

FIGS. 10A and 10B illustrate a state in which the ion beam 4 is raster-scanned along a scan path 40 in the processable region 3 illustrated in FIGS. 1A to 1G. A raster scan is a scan mode in which a line scan is repeated back and forth by gradually shifting the line until a desired surface is scanned. As illustrated in FIG. 10A, the raster scan needs a step section 41 connecting between lines to form its shape. The optical effective region 2 is larger than the processable region 3 capable of scanning the ion beam 4, and thus the optical effective region 2 is divided into a plurality of regions to process the entire surface. It is a line portion that is important to obtain a desired processing shape by the raster scan. The step section 41 suffers an unexpected removal and the processing precision deteriorates. Therefore, usually, as illustrated in FIG. 10B, the step section 41 is disposed outside the optical effective region 2. However, the processing precision deteriorates due to the step section 42 provided in the optical effective region 2. In order to prevent this, in the step section 42 inside the optical effective region 2, radiation of the ion beam 4 is stopped or the amount of radiation is reduced to eliminate or reduce the effect of the step section 42. Thereby, the processing precision of the optical effective region 2 can be maintained.

In order to stop radiation or reduce the amount of radiation in the step section 42 inside the optical effective region 2, a beam-shaped tool or a jet-shaped tool is effective. The ion beam 4 is raster-scanned by causing the ion gun to scan, but the optical element 1 may be scanned, or both the ion gun and the optical element 1 may be scanned.

When the scan path is crossed with the dividing line in a boundary portion between the divided regions inside the optical effective region 2, scanning is made to continue until the center of the ion beam reaches the dividing line. Thereby, the processing precision can be maintained to a high precision even in a boundary portion between the divided regions. When the scan path is parallel to the dividing line, scanning is performed in such a manner that the center of the beam is located inside by half the beam diameter from the dividing line. In other words, scanning is performed in such a manner that the outside diameter of the beam is located on the dividing line. Thereby, the processing precision can be maintained to a high precision even in a boundary portion between the divided regions.

<Example>

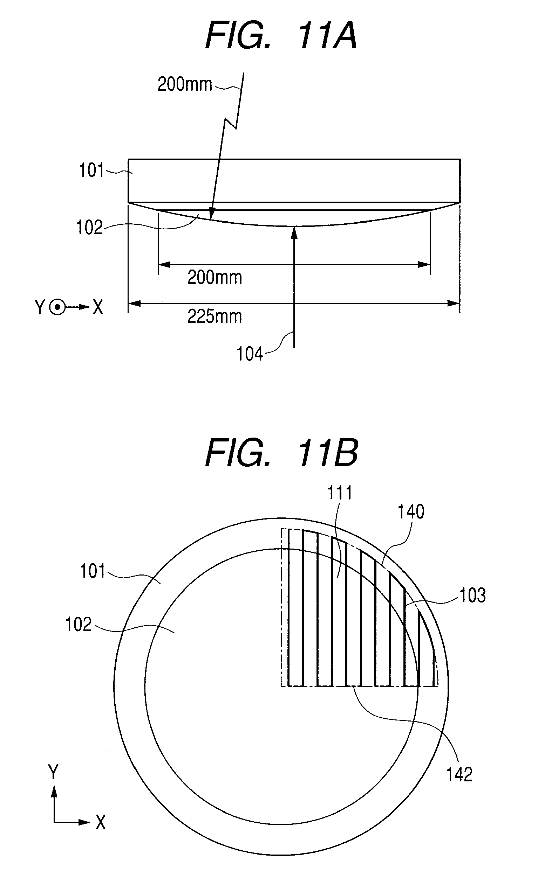

As illustrated in FIGS. 11A and 11B, an ion beam 104 having a processable region (processing region) 103 smaller than an optical effective region 102 was emitted to a convex lens 101 which is an optical element to process a shape of the optical effective region 102. The optical effective region 102 was divided into four divided regions 111 to 114 described later. The ion beam 104 processing the convex lens 101 scanned each of the four divided regions 111 to 114 along a scan path 140. The outside diameter of the convex lens 101 was 225 mm, the diameter of the optical effective region 102 was 200 mm, and the radius of the convex lens 101 was 200 mm. The scan path 140 was for raster scan. In the step section 142 connecting between the lines for the raster scan inside the optical effective region 102, radiation of the ion beam 104 was stopped.

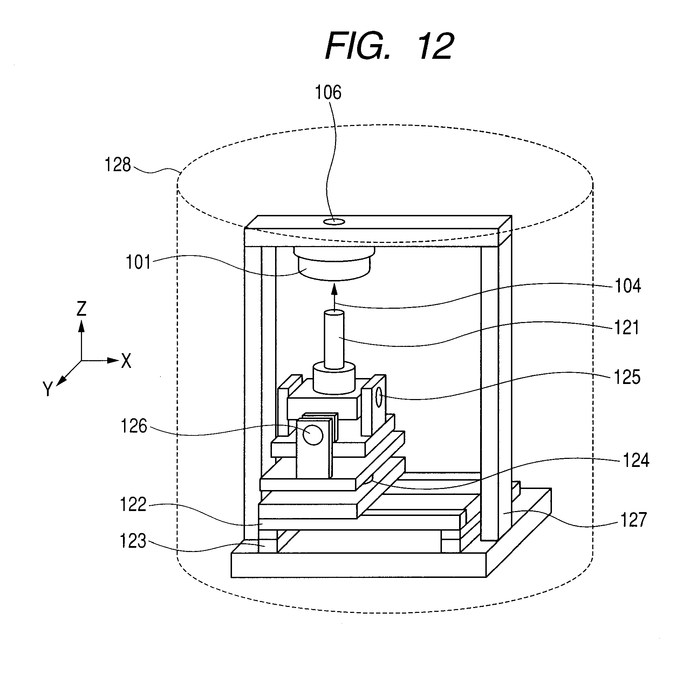

FIG. 12 illustrates a processing apparatus. The convex lens 101 was mounted on a workpiece stage 106 with its optical surface oriented in a -Z direction. A rotation mechanism was provided in the workpiece stage 106 so as to be rotatable around the Z axis. The central axis of the convex lens 101 was made to match the rotation axis of the workpiece stage 106. The ion gun 121 was disposed in a position facing the convex lens 101. The ion beam 104 was emitted from the ion gun 121. The ion gun 121 was disposed on five axis stages: an X stage 122 and a Y stage 123 responsible for the horizontal movement; a Z stage 124 responsible for the vertical movement; and two rotation mechanisms: a rotation mechanism 125 around the x axis and a rotation mechanism 126 around the Y axis, all of which enabled a three-dimensional operation. In order to stabilize the processing process and provide high precision processing, a constant distance between the ion gun 121 and the convex lens 101 was always maintained and the ion beam 104 was always emitted vertically to the convex lens 101. The workpiece stage 106 side and the ion gun 121 side was integrated in a frame 127. The entire apparatus was housed in a vacuum chamber 128 to keep the entire processing environment in high vacuum.

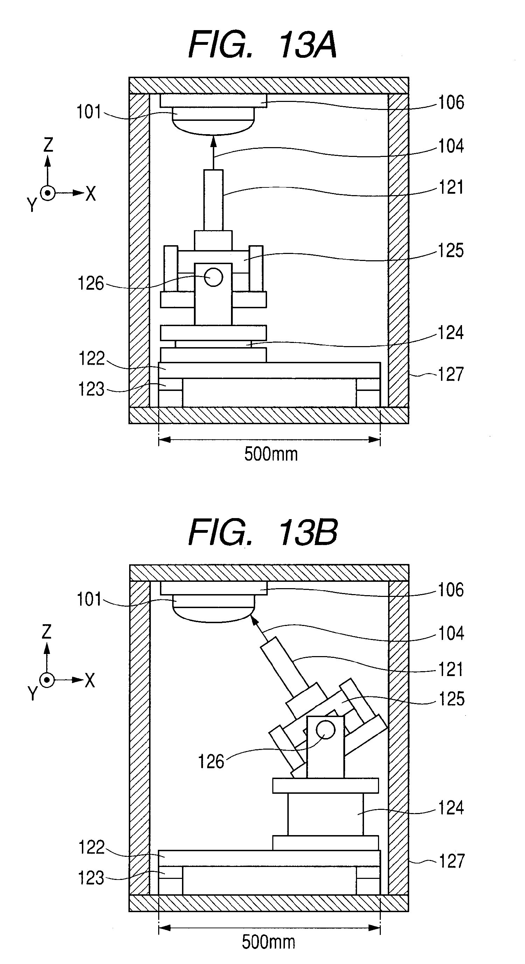

First, a first divided region of the divided regions 111 to 114 was processed. At this time, the processing region in the X direction was half in the +X direction from the center of the convex lens 101. The X stage drive region required for the processing apparatus was a range from a position illustrated in FIG. 13A to a position illustrated in FIG. 13B. In the convex lens 101 processed this time, the total length of the required X stage was 500 mm. Likewise in the Y direction, the processing region was half in the +Y direction from the center of the convex lens 101, and the total length of the required Y stage was 500 mm.

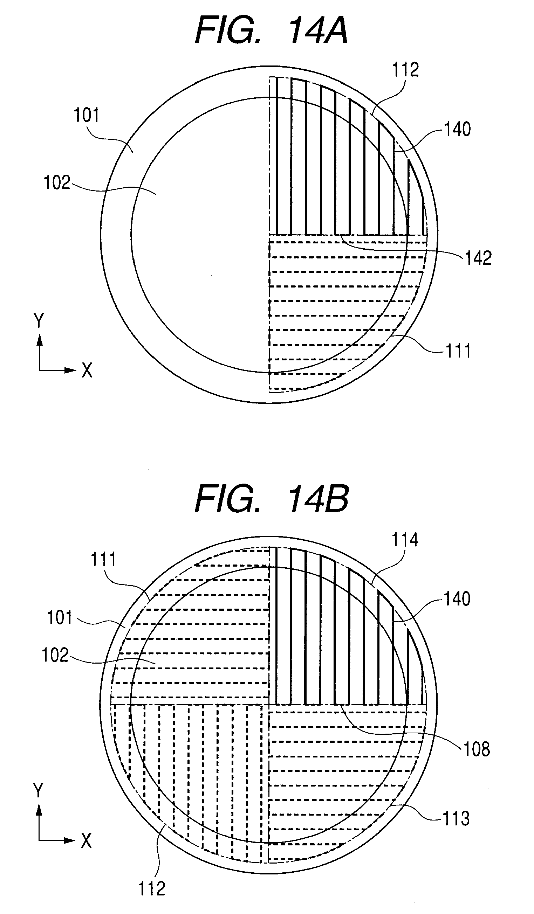

Then, the workpiece stage 106 was rotated by 90° around the Z axis, and as illustrated in FIGS. 14A and 14B, a divided region 112 adjacent to the first processed divided region 111 was processed. In this processing, the scan path was the same scan path 140 as used when the divided region 111 was processed, and the X Y stage drive regions required for the processing apparatus were also the same as used when the divided region 111 was processed. Subsequently, the divided regions 113 and 114 were processed likewise, and the processing of the entire optical effective region 102 was completed.

In the step section 142, the radiation of the ion beam 104 was stopped. Therefore, over-processing or under-processing did not occur in a connecting portion of the divided regions, and a well shape precision was achieved.

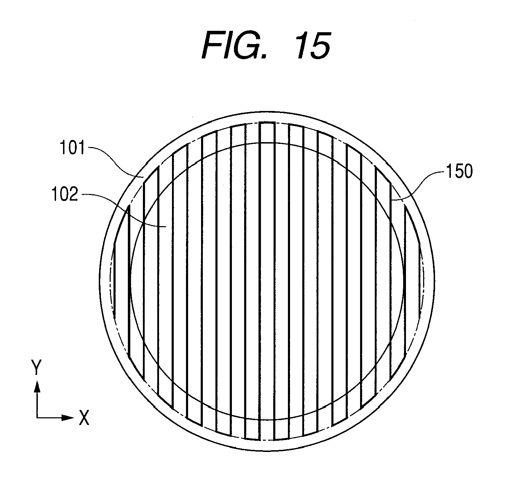

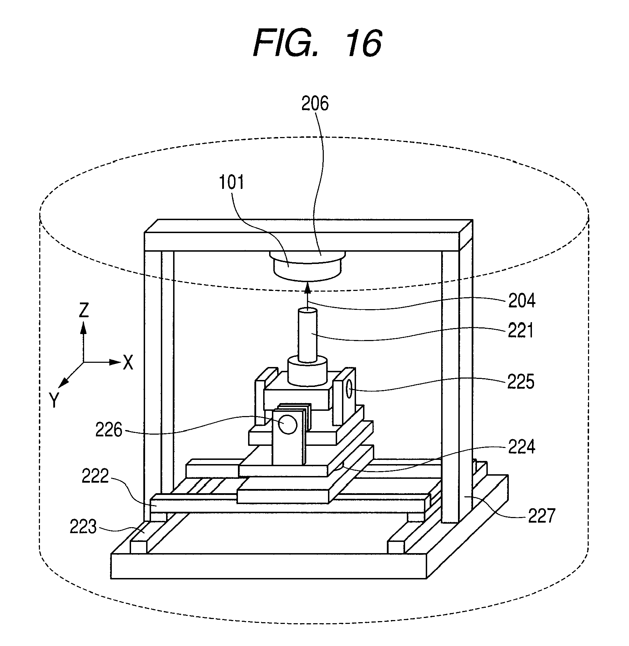

For the purpose of comparison, a case is described where the optical element 101 was processed by a conventional technique. As illustrated in FIG. 15, the optical element 101 was processed by a raster scan along the scan path 150 at a time without dividing the optical effective region 102. As a result, the stage drive region required for the processing apparatus was increased. In this case, as illustrated in FIG. 16, a larger drive region was required for the X stage 222 and the Y stage 223 of the processing apparatus. The workpiece stage 206, the Z stage 224, the rotation mechanisms 225 and 226 around the X and Y axes and the frame 227 were the same as those of the processing apparatus illustrated in FIG. 12. In this configuration, a drive region covering the entire processing range was required for the X stage 222. For processing the convex lens 101, a total length of 800 mm was required for the X stage 222 and a total length of 800 mm was required for the Y stage 223 likewise.

When the X Y stage surface is considered, the conventional example of processing the optical effective region at a time required a region of 800 mm × 800 mm, whereas the present embodiments of processing the divided regions required a region of 500 mm × 500 mm. That is, the reduction in area ratio was about 60% and thus the processing apparatus was made to be significantly smaller.

Instead of the ion beam, an electronic beam, a laser beam, a magnetic fluid, a magnetic fluid jet, a liquid jet, a plasma jet, a polishing pad, an abrasive grindstone, an EEM (Elastic Emission Machining) tool, and the like may be used. Considering a need to stop or reduce the processing capability in the step section, particularly beam-based tools and jet-based tools are suitable. The scan path was such that a straight line was connect orthogonally to a straight line and a scan proceeded sequentially from an outer circumference to an inner circumference, but the scan may be a raster scan, a spiral scan, or a scan along a free curve. The optical element was illustrated as a rectangular parallelepiped, and the optical effective region was illustrated as a rectangular flat surface, but the optical element may be of any shape such as a cone and a sphere, and the optical effective region may also be of various shapes such as a spherical shape, an aspherical shape and a free-form surface shape. The optical element is made of metal, glass or resin, and the optical effective region functions as a reflecting mirror, a permeable lens, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
The entire processing apparatus is prevented from growing in size due to the size of an optical effective region of an optical element to be processed. The optical effective region 2 of the optical element 1 is divided into a plurality of divided regions 11 to 14 by the dividing line 5 and each divided region is sequentially aligned to the processable region 3 of the ion beam 4. The entire optical effective region 2 is processed by repeating the process of a raster scan with the ion beam 4 for each divided region in all divided regions 11 to 14. The entire processing apparatus can be made to be small by reducing the scanning range of the ion beam 4.

## Claims

1. An optical element processing method in which an optical effective region of an optical element is processed by a processing unit scanning a processing region smaller than the optical effective region, the optical element processing method comprising:
dividing the optical effective region by a dividing line into at least a first divided region and a second divided region;
aligning the first divided region to a processing region of the processing unit;
processing the aligned first divided region by scanning with the processing unit;
aligning the second divided region to a processing region of the processing unit; and
processing the aligned second divided region by scanning with the processing unit.

2. The optical element processing method according to claim 1, wherein a surface of the optical element is processed with an ion beam.

3. The optical element processing method according to claim 2, wherein the scanning with the processing unit is a raster scan, and
wherein the raster scan is configured for a line section and a step section, and radiation of the ion beam is stopped or the amount of radiation of the ion beam is reduced in the step section.
